# EUROPEAN PATENT APPLICATION

(11) **EP 4 841 908 A1**
(43) Date of publication of application: **18.11.2026**
(21) Application number: 26177809.6
(22) Date of filing: 11.05.2026
(51) Int. Cl.: H04B 7/06

(54) **SYSTEMS AND METHODS FOR ANTENNA PORT AND PANEL ADAPTATION FOR UPLINK (UL) TRANSMISSION**

(30) Priority: 12.05.2025 US 202563804423 P; 05.05.2026 US 202619668057
(71) Applicant: Samsung Electronics Co., Ltd., Suwon-si, Gyeonggi-do 16677 (KR)
(72) Inventor: SHAHMOHAMMADIAN, Hoda, San Jose, CA, 95134 (US); BAE, Jung Hyun, San Jose, CA, 95134 (US)
(74) Representative: Kuhnen & Wacker Patent- und Rechtsanwaltsbüro PartG mbB

(57) **Abstract**

A system and a method are disclosed for performing port and/or panel adaptation for uplink, UL, transmission. The method includes performing, by a user equipment, UE, (105) in a first state (S1), a first uplink, UL, transmission (20a) from a first antenna unit (U1, U2), performing, by the UE (105), in a second state (S2), a second UL transmission (20b) from a second antenna unit (U3, U4), and receiving, by the UE (105), an explicit indication to remap and/or to switch from the first antenna unit (U1, U2) to the second antenna unit (U3, U4), the second antenna unit (U3, U4) being different from the first antenna unit (U1, U2).

## Description

### TECHNICAL FIELD

The disclosure generally relates to communications. More particularly, the subject matter disclosed herein relates to improvements to systems, in particular a user equipment, and methods for antenna port and antenna panel (e.g., antenna array) adaptation for uplink (UL) transmission.

### SUMMARY

In the field of communications, a user equipment (UE) may be configured to receive downlink (DL) signals from a network node (e.g., from a gNodeB (gNB)) and may be configured to transmit uplink (UL) signals to the network node. The UE may include a limited number of transmission channels (e.g., transmission chains) and antenna ports or panels for performing UL transmissions. Some transmission channels and antenna ports or panels of the UE may result in better transmission performance than other transmission channels and antenna units in a given scenario. For example, interference that is present at one time may have more impact on a first channel/antenna unit than on a second channel/antenna unit. Accordingly, the UE may be configured to transmit using the second channel/antenna unit to achieve the better transmission performance. Additionally, the UE may be configured to switch to (e.g., to adapt to) different transmit channels/antenna units to become better suited (e.g., to achieve improved transmission performance) to its environment as conditions change.

To select UL transmission antenna units (e.g., to select one or more best UL transmission antenna units), the UE may rely on channel reciprocity and a downlink reference signal (DL RS) measurement. For example, a UE may determine which of its antenna units are suitable to use for one or more UL transmissions based on assuming channel reciprocity (e.g., based on assuming that the channel properties for downlink receptions and uplink transmissions are the same) and based on performing one or more DL RS measurements for different transmission ports and/or for different transmission panels.

Antenna port selection, based on UE implementation (e.g., determined by the UE), may not always lead to the best outcome (e.g., may not always lead to the best uplink performance) due to the reliance on the channel reciprocity assumption. For example, channel reciprocity may not always be valid and can be degraded (e.g., can be significantly degraded) due to the possibility of different interference conditions between DL and UL transmissions.

The current 3GPP specification does not set forth behavioral or timeline guidelines for the purpose of determining antenna unit adaptation for UL transmission. Accordingly, aspects of embodiments of the present disclosure provide methods of behavior and timing to allow for suitable antenna unit selection and adaptation for UL transmissions.

In some embodiments, a network node may configure a UE to transmit different sound reference signal (SRS) resources with different antenna units. The network node may determine which antenna units are selected for UL transmission based on characteristics of the SRS resources.

In some embodiments, the network node may be configured to initiate port adaptation (e.g., remapping and/or switching of ports) for UL transmission.

In some embodiments, the UE may initiate port adaptation port adaptation for UL transmission.

According to some embodiments of the present disclosure, a method for antenna port or panel adaptation for UL transmission includes performing, by a user equipment (UE), in a first state, a first uplink (UL) transmission from a first antenna unit, performing, by the UE, in a second state, a second UL transmission from a second antenna unit, and receiving, by the UE, an explicit indication to remap and/or to switch from the first antenna unit to the second antenna unit, the second antenna unit being different from the first antenna unit.

The UE may include x transmission (TX) chains and y reception (RX) chains, x and y being integers that are greater than one, and x being an integer that is less than y.

The first antenna unit may be configured to transmit a first sound reference signal (SRS) resource of a first SRS-resource set, and the second antenna unit may be configured to transmit a second SRS resource of the first SRS-resource set.

The first SRS resource and the second SRS resource may be two configured SRS resources, in the first SRS-resource set, associated with a same number of antenna units, the first SRS resource and the second SRS resource being configured to be transmitted from different antenna units.

The first SRS resource and the second SRS resource may be two configured SRS resources, in the first SRS-resource set, associated with different numbers of antenna units, the first SRS resource and the second SRS resource being configured to be transmitted from different antenna units.

The explicit indication may be received via downlink control information (DCI), via a medium access control (MAC) control element (CE), or via a radio resource control (RRC).

An application time of the explicit indication to remap and/or to switch from the first antenna unit to the second antenna unit may be based on one or more capabilities of the UE.

The explicit indication to remap and/or to switch the second antenna unit may be based on an index of the second antenna unit.

The explicit indication to remap and/or to switch from the first antenna unit to the second antenna unit may be based on a one-to-one linkage of antenna unit selection with configured SRS resources.

The first UL transmission and the second UL transmission may be consecutive transmissions, and the UE may perform the second UL transmission based on complying with an application time to remap and/or to switch to the second antenna unit.

The method may further include sending, by the UE, information indicating one or more supported antenna unit mapping candidates.

The method may further include sending, by the UE, a UE-capability signal indicating that the UE is capable of performing event-based remapping and/or event-based switching based on a triggering-event condition being satisfied.

The triggering-event condition may include a quality of a reception via one or more current antenna units is worse than a threshold, or a quality of a reception via at least one new antenna unit is a threshold value better than a quality of a reception via a current antenna unit, or a quality of a reception via one or more new antenna units is better than a threshold, or a quality of a reception via one or more current antenna units is worse than a first threshold, and a quality of a reception via at least one new antenna unit is better than a second threshold, the second threshold being equal to or different from the first threshold, or a quality of a reception via at least one new antenna unit becomes a threshold value better than reception qualities of antenna units having the M best reception qualities, M being an integer greater than or equal to one.

The quality of the reception may be determined based on determining a measurement quantity from a configured downlink reference signal (DL RS).

The method may further include sending a report based on the triggering-event condition being satisfied, the report including an indication of the one or more antenna units satisfying a configured triggering-event condition.

The method may further include sending a report based on the triggering-event condition being satisfied, the report being sent by uplink control information (UCI) transmitted in a physical uplink control channel (PUCCH) resource, or dynamic physical uplink shared channel (PUSCH) and/or configured grant (CG) PUSCH.

The method may further include sending a notification from the UE based on the triggering-event condition being satisfied, the notification including an indication of a type of triggering-event condition that is satisfied, or an indication of a remapping and/or a switching of one or more antenna units at the UE.

The method may further include receiving, by the UE, an acknowledgement of the remapping and/or the switching of the one or more antenna units in response to the UE sending the indication of the remapping and/or the switching of the one or more antenna units.

According to other embodiments of the present disclosure, a device for antenna port or panel adaptation for UL transmission includes a processing circuit configured to cause the device to perform in a first state, a first uplink (UL) transmission from a first antenna unit, in a second state, a second UL transmission from a second antenna unit, and receiving an explicit indication to remap and/or to switch from the first antenna unit to the second antenna unit, the second antenna unit being different from the first antenna unit.

According to other embodiments of the present disclosure, a system for antenna port or panel adaptation for UL transmission includes a network node configured to perform configuring a UE, in a first state, to perform a first uplink (UL) transmission from a first antenna unit, configuring the UE, in a second state, to perform a second UL transmission from a second antenna unit, and sending an explicit indication to the UE to remap and/or to switch from the first antenna unit to the second antenna unit, the second antenna unit being different from the first antenna unit.

### BRIEF DESCRIPTION OF THE DRAWING

In the following section, the aspects of the subject matter disclosed herein will be described with reference to exemplary embodiments illustrated in the figures.
FIG. 1 is a block diagram depicting aspects of a system in which antenna port and/or antenna panel (e.g., antenna array) adaptation may be performed, according to aspects of some embodiments of the present disclosure, for improved UL transmission performance.
FIGS. 2A and 2B (collectively FIG. 2) are block diagrams depicting a method for dynamic selection of antenna units, according to some embodiments of the present disclosure.
FIG. 3 is a block diagram depicting an example of a power amplifier (PA) architecture of a given UE, according to some embodiments of the present disclosure.
FIG. 4A is a table depicting selections of r antenna units from among M antenna units configured to transmit a relatively small number of configured SRS resources, according to some embodiments of the present disclosure.
FIG. 4B is a table depicting selections of r antenna units from among M antenna units configured to transmit a relatively smaller number of configured SRS resources, according to some embodiments of the present disclosure.
FIG. 4C is a table depicting selections of different numbers of r antenna units from among M antenna units, according to some embodiments of the present disclosure.
FIG. 5 is a block diagram of an electronic device in a network environment, according to some embodiments of the present disclosure.
FIG. 6 is a flowchart depicting example operations of the method for performing antenna unit (e.g., antenna port or antenna panel) adaptation for UL transmission, according to some embodiments of the present disclosure.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Each of the terms "processing circuit" and "means for processing" is used herein to mean any suitable combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

In wireless communication systems, user devices (e.g., UEs) may include multiple antennas that can be used for transmitting uplink signals to a network node. However, selecting which antennas to use for transmission can be challenging. In many situations, the best antenna configuration may change over time due to, for example, movement of the user device, changes in surrounding objects, interference from other devices, or differences between downlink and uplink channel conditions. As a result, a static antenna configuration (e.g., an antenna configuration that cannot adapt to changing conditions) may lead to reduced signal quality and degraded uplink performance.

Some approaches may rely on simplified assumptions, such as channel reciprocity or fixed antenna mappings, which may not accurately reflect real operating conditions. For example, interference experienced during uplink transmission may differ from interference observed during downlink reception. Additionally, hardware limitations and antenna architecture constraints may restrict which antenna combinations can be used. These factors make it difficult to reliably select antenna configurations that provide acceptable (e.g., optimal) uplink performance.

Aspects of some embodiments according to the present disclosure may include techniques for dynamically selecting and switching antenna ports or antenna panels for uplink transmission. For example, aspects of some embodiments of the present disclosure may include techniques that may enable a network node and/or a user device to evaluate candidate antenna configurations, determine suitable antenna mappings based on measured conditions, and apply the selected mapping according to defined timing behavior. By enabling flexible and coordinated antenna selection, the disclosed techniques may improve uplink transmission quality, reduce performance degradation, and better adapt to changing wireless environments.

The techniques described herein provide improvements to wireless communication systems by enabling coordinated selection and switching of antenna ports or antenna panels used for uplink transmission. Unlike approaches that may merely select among abstract options, the disclosed techniques affect how radio-frequency signals are transmitted over physical antennas and how hardware transmission chains are connected to antenna elements. By adapting antenna mappings based on measured channel conditions and applying defined switching timelines, the disclosed embodiments improve signal quality, reduce interference effects, and enhance reliability of uplink transmission. Accordingly, the techniques provide improvements to the functioning of wireless communication devices and network nodes.

As discussed above, in the field of communications, a user equipment (UE) may be configured to receive downlink (DL) signals from a network node (e.g., from a gNodeB (gNB)) and may be configured to transmit uplink (UL) signals to the network node. The UE may include a limited number of transmission channels (e.g., transmission chains) and antenna units for performing UL transmissions. As used herein, the term "antenna unit" refers to one or more antennas (e.g., one or more physical antennas). For example, one antenna unit may refer to one antenna port or may refer to one antenna panel (also referred to as an antenna array) made up of multiple interconnected antenna ports. Some transmission channels and antenna units of the UE may result in better transmission performance than other transmission channels and antenna units in a given scenario. For example, interference that is present at one time may have more impact on a first channel/antenna unit than on a second channel/antenna unit. Accordingly, the UE may be configured to transmit using the second channel/antenna unit to achieve the better transmission performance. Additionally, the UE may be configured to switch to (e.g., to adapt to) different transmit channels/antenna units to become better suited (e.g., to achieve improved transmission performance) to its environment as conditions change.

In the current 3^{rd} Generation Partnership Project (3GPP) specification, for a UE that is equipped with (e.g., that is configured for) a larger number of reception (RX) chains than transmission (TX) chains applicable to both Frequency Range 1 (FR1) (covering 410 mega-Hertz (MHz) to 7125 MHz) and Frequency Range 2 (FR2) (covering 24.25 giga-Hertz (GHz) to 52.6 GHz) scenarios, mapping of physical antenna ports to one or more sounding reference signal (SRS)/physical uplink shared channel (PUSCH)/physical uplink control channel (PUCCH) ports (also referred to herein as "uplink ports") is up to UE implementation (e.g., depends on the specific implementation of each given UE). In other words, determining port adaptation for UL transmission depends on a given UEs capabilities (e.g., capabilities associated with the UEs implementation). As used herein, an "RX chain" (also referred to as a reception chain or a receiver chain) refers to a signal path including electronic components for processing a signal that is received by an antenna and converting the signal from a radio frequency (RF) analog signal into a digital signal. As used herein, a "TX chain" (also referred to as a transmission chain or a transmitter chain) refers to a signal path including electronic components from processing a digital signal and converting it to an amplified RF analog signal for transmitting from an antenna.

To select UL transmission antenna units (e.g., to select one or more best UL transmission antenna units), the UE may rely on channel reciprocity and a downlink reference signal (DL RS) measurement. For example, a UE may determine which of its antenna units are suitable to use for one or more UL transmissions based on assuming channel reciprocity (e.g., based on assuming that the channel properties for downlink receptions and uplink transmissions are the same) and based on performing one or more DL RS measurements for different transmission ports and/or for different transmission panels (e.g., for different antenna units). As used herein, a "panel" (also referred to as an "array") refers to a configuration of multiple antennas used to perform beamforming (e.g., to perform beam forming at high frequencies, such as at FR2) to achieve greater signal strengths and/or greater transmission distances than would otherwise be possible without the use of multiple antennas. As can be seen from the discussion below, many of the operations discussed herein for port selection/port adaptation for UL transmission are similar to (or the same as) operations discussed herein for panel selection/panel adaptation. As such the term antenna unit has been defined above to more easily discuss operations associated with both antenna ports and antenna panels.

Antenna port selection, based on UE implementation (e.g., determined by the UE), may not always lead to the best outcome (e.g., may not always lead to the best uplink performance) due to the reliance on the channel reciprocity assumption. For example, channel reciprocity may not always be valid and can be degraded (e.g., can be significantly degraded) due to the possibility of different interference conditions between DL and UL transmissions. For example, in multi-user multiple-input multiple-output (MU-MIMO) scenarios, the UE may not be aware of possible interference on (e.g., in) the UL channel, especially with inter-cell interference. Additionally, in high-mobility scenarios, channel aging (in which channel state information (CSI) becomes outdated) may also degrade UL performance.

The current 3GPP specification does not set forth behavioral or timeline guidelines for the purpose of determining antenna unit adaptation for UL transmission. Accordingly, aspects of embodiments of the present disclosure provide methods of behavior and timing to allow for suitable antenna unit selection and adaptation for UL transmissions.

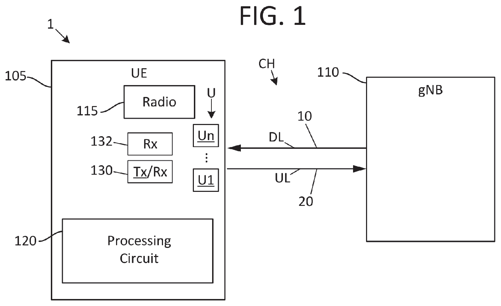

FIG. 1 is a block diagram depicting aspects of a system 1 in which antenna port and/or antenna panel (e.g., antenna array) adaptation may be performed, according to aspects of some embodiments of the present disclosure, for improved UL transmission performance.

Referring to FIG. 1, the system 1 may include a UE 105 and a network node 110 (e.g., a base station, such as a gNB). As used herein, the term "UE" refers to an electronic communications device. For example, UEs may include computers, mobile phones, tablets, vehicles, satellites, IoT devices, and/or the like.

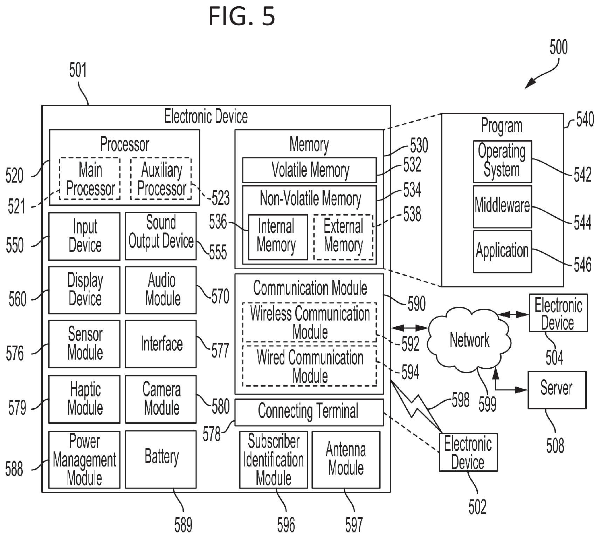

The UE 105 may be capable of receiving DL transmissions 10 from the network node 110 and may be capable of sending UL transmissions 20 to the network node 110. The UE 105 may include a radio 115 and a means for processing. The means for processing may include a processing circuit 120, which may perform various methods disclosed herein. The radio 115 may correspond to the communication module 590 (see FIG. 5). The processing circuit 120 may correspond to the processor 520 (see FIG. 5).

The UE 105 may include multiple antenna units U (e.g., a first antenna unit U1 through an n-th antenna unit Un). The antenna units U may correspond to the antenna module 597 (see FIG. 5). The antenna units U (e.g., physical antenna ports or physical antenna panels) may be configured to assist in receiving the DL transmissions 10 and in transmitting the UL transmissions 20. The UE 105 may include transceivers 130 and receivers 132. The transceivers 130 and/or receivers 132 may correspond to the communication module 590 (see FIG. 5). For example, the transceivers 130 and/or receivers 132 may correspond to the wireless communication module 592 (see FIG. 5). The transceivers 130 and receivers 132 may be connected to corresponding ones of the antenna units U. The connections between the transceivers 130 and/or the receivers 132 and their corresponding antenna units U may be switchable. For example, in a first state, a first transceiver 130 may be mapped and connected to one or more first antenna units U1. In a second state, the first transceiver 130 may be remapped and switched (e.g., and have its connections switched) to be connected to one or more n-th antenna units Un. For example, in the first state, the first transceiver 130 may be configured to send a reference signal (e.g., an SRS), to send data (e.g., via a PUSCH), and/or to send control information (e.g., via a PUCCH) to the network node 110 using the first antenna unit U1. In the second state, the first transceiver 130 may be configured to send a reference a reference signal (e.g., an SRS), to send data (e.g., via a PUSCH), and/or to send control information (e.g., via a PUCCH) to the network node 110 using the n-th antenna unit Un. In the first and second states, the receiver 132 and/or other transceivers 130 may perform reception of DL signals.

As discussed above, in some systems, the UE 105 may determine which antenna units U to use for sending a UL transmission 20 based on the quality of a received DL transmission 10. Such a determination would assume channel reciprocity. In other words, the determination would assume that the characteristics of channels CH (e.g., one or more port channels or one or more panel channels), through which the DL transmissions 10 and the UL transmissions 20 are sent via a given antenna unit U, would be the same for both the DL transmission 10 and the UL transmission 20. However, such an assumption is not always correct and can lead to degraded UL-transmission performance.

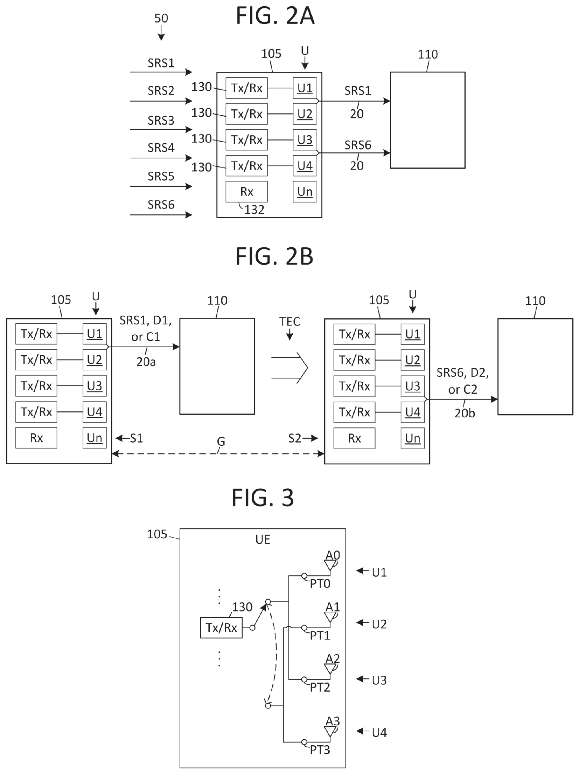

FIGS. 2A and 2B (collectively FIG. 2) are block diagrams depicting a method for dynamic selection of antenna units U, according to some embodiments of the present disclosure.

Referring to FIG. 2A, in some embodiments, to address the challenge of channel reciprocity and to aid the UE 105 to select the best antenna units U (e.g., the best one or more SRS/PUSCH/PUCCH ports), the antenna units U (e.g., the first antenna unit U1 through the n-th antenna unit Un) may be configured to transmit corresponding ones of SRS resources (e.g., SRS1 through SRS6) associated with an SRS-resource set 50. For example, during a testing phase, the UE 105 may transmit one or more of the SRS resources from the SRS-resource set 50 to the network node 110. The network node 110 may observe (e.g., may receive) the SRS resources and determine which SRS resources from the SRS-resource set 50 have acceptable (e.g., desirable) performance characteristics.

The network node 110 may measure a signal strength (e.g., a signal received power (RSRP)) of each SRS resource and determine which SRS resources have the greatest signal strength. For example, the network node 110 may determine that sending SRS1 using both the first antenna unit U1 and the second antenna unit U2 results in an acceptable performance characteristic (e.g., the best performance characteristic). The network node 110 may determine that sending SRS6 using both the third antenna unit U3 and the fourth antenna unit U4 results in another acceptable performance characteristic (e.g., a second best performance characteristic).

Referring to FIG. 2B, in some embodiments, the UE 105 may be configured to transmit a first UL transmission 20a using the first antenna unit U1 and the second antenna unit U2. For example, the network node 110 may then cause the UE 105 to use the first antenna unit U1 and the second antenna unit U2 for UL transmissions. That is, the UE 105 may be configured to transmit SRS/PUSCH/PUCCH based on the determination that the using both the first antenna unit U1 and the second antenna unit U2 results in an acceptable performance characteristic. In some embodiments, the network node 110 may indicate one or more SRS resources in the scheduling DCI (e.g., via an SRS resource indicator (SRI) field) to aid the UE 105 with selecting one or more UL transmission ports (e.g., one or more antenna units U).

Based on the determination to use both the first antenna unit U1 and the second antenna unit U2, the UE 105 may send an SRS (e.g., SRS1), may send data (e.g., D1), or may send control information (e.g., C1) in a first state S1. At some point, a triggering-event condition TEC may occur. For example, as discussed in further detail below, a quality of a reception via the first antenna unit U1 and the second antenna unit U2 may become worse than a threshold (e.g., a threshold signal-strength value) and/or a quality of another one or more antenna units (e.g., the third antenna unit U3 and the fourth antenna unit U4) may become better than the threshold. Based on the triggering-event condition TEC occurring, the connections of the UE 105 may be remapped and/or switched to transmit via the third antenna unit U3 and the fourth antenna unit U4. In some embodiments, the UE 105 (e.g., the processing circuit 120/processor 520) may determine that a triggering-event condition TEC is satisfied (e.g., a triggering-event condition TEC has occurred or is occurring. The UE 105 (e.g., the processing circuit 120/processor 520) may determine operations to perform based on the triggering-event condition TEC is satisfied. For example, the processing circuit 120/processor 520 may determine how the connections of the UE 105 may be remapped and/or switched (e.g., to transmit via the third antenna unit U3 and the fourth antenna unit U4).

In some embodiments, the UE 105 may perform a second UL transmission 20b using the third antenna unit U3 and the fourth antenna unit U4. For example, the UE 105 may send an SRS (e.g., SRS6), may send data (e.g., D2), or may send control information (e.g., C2) in a second state S2. In some embodiments, the UE 105 may send the second UL transmission 20b based on complying with a time gap G (e.g., a configured time gap, also referred to as an application time). For example, the time gap G may be observed to allow enough time between consecutive transmissions for the connections of the UE 105 to be remapped and/or switched to a new antenna unit U configuration.

In some embodiments, and as discussed in further detail below, a scheme for mapping antenna units U (e.g., UE antenna elements) to ports of SRS resources (e.g., to SRS-resource ports) comprises configuring enough SRS resources for codebook-based UL transmission to provide flexibility for all or most possible antenna-unit- (e.g., antenna-port-) mapping scenarios. For example, for a given UE 105 with four antenna ports to perform codebook-based UL transmission 20 over two ports, six configured SRS resources (e.g., SRS1 through SRS6) could be used for full flexibility of antenna-port selection. Such a solution could come at the expense of increased resource overhead. As such, it may be suitable (e.g., it may be desirable) to specify behavioral and/or timeline guidelines for UL transmission-port selection to improve UL performance.

As discussed in further detail below, aspects of some embodiments of the present disclosure provide systems and methods for determining antenna port selection for UL transmission 20 on either the network-node side (e.g., a network-node-determined port adaptation) or on the UE side (e.g., a UE-initiated port adaptation). In some embodiments, antenna port selection can be done in a layer-common manner (e.g., via a medium access control (MAC) layer). In some embodiments, antenna port selection can be done individually per layer of transmission. Performing antenna port selection per layer of transmission may use more indication overhead than performing antenna port selection in the layer-common manner.

In some embodiments, selection criteria may be related to performance and/or to one or more of a given UE power amplifier (PA) architecture, UE coherency capability, and/or UE spatial channel. In some embodiments, selection criteria may include determining a suitable tradeoff between performance and indication overhead. In some embodiments, when port selection is decided on the network-node side (e.g., at the gNB side), selected ports may be semi-statically indicated to the UE 105 (e.g., through radio-resource-control (RRC) configuration) or, alternatively, can be dynamically indicated to the UE 105. In some embodiments, antenna port selection may be indicated with an RRC parameter (e.g., using a new RRC parameter) or with a new and/or re-used DCI field or a new and/or re-used MAC control element (CE) field in a codepoint manner or bitmap manner. The codepoint manner may have less overhead than the semi-static configuration manner. Alternatively, in some embodiments, the UE 105 may determine the antenna port selection and may inform (e.g., may notify) the network node 110 (e.g., the gNB) about any updates regarding antenna port selection.

### Network-Node Initiated Port Adaptation

In some embodiments, to avoid relying on channel reciprocity for UL transmission port selection, the network node 110 (e.g., the gNB) may acquire information about one or more uplink-port channels through configuring enough SRS resources (e.g., for codebook-based UL transmission and/or for antenna-switching use cases) to provide flexibility for all or most possible scenarios of antenna-port mapping (e.g., mapping between physical antennas of the UE 105 and transmission chains used for UL transmissions). In some embodiments, SRI signaling (e.g., legacy SRI signaling) may be utilized for port selection in uplink transmission. For example, each indicated port selection by a network node 110 (e.g., by a gNB) may have a one-to-one linkage with an SRS resource. For example, in some embodiments, the network node 110 may send, to the UE 105, an explicit indication to remap and/or to switch an antenna unit U based on a one-to-one linkage of antenna unit selection with configured SRS resources.

In such embodiments, for codebook-based UL transmission, one solution for a given UE 105 with M antenna ports, is to configure ( $\begin{matrix}M \\ r\end{matrix}$) SRS resources for full flexibility of antenna port selection for a codebook-based UL transmission over *r* ports (e.g., r UL ports). For example, the SRS resources may be configured to antenna units based on a combination of M items (e.g., M ports) taken r at a time. In such embodiments, the worst-case resource overhead scenario would be with *r* = 1 and up to *M* SRS resources being configured with usage of codebook-based transmission. In some embodiments, the value of *r* may be semi-statistically configured to the UE 105, subject to (e.g., based on) the capabilities of the UE 105. For example, if the UE 105 has M = 4 antenna ports, additional UE capability signaling and RRC configuration may be implemented for selecting r ports (e.g., for selecting r = 3).

FIG. 3 is a block diagram depicting an example of a PA architecture of a given UE 105, according to some embodiments of the present disclosure.

In some embodiments, possible antenna port mapping at the UE 105 may be related to (e.g., may be determined based on) the PA architecture of the given UE 105 and/or a coherency capability of the UE 105. In such embodiments, a new capability for the UE 105 may be introduced (e.g., may be implemented) to inform the network node 110 (e.g., the gNB) about supported candidates out of ( $\begin{matrix}M \\ r\end{matrix}$) possible port mappings for each given *r* at the UE 105, depending on the implementation (e.g., the architecture) of the given UE 105.

For example, for a UE 105 with 4 ports (e.g., ports PTO through PT3, also referred to as antenna units U1 through U4 and connected to antennas A0 through A3) as shown in FIG. 3, a codebook-based UL transmission over two ports (e.g., for a switching configuration of 2T4R, which refers to using 4 antennas for receiving DL signals and switching to 2 antenna subsets for UL transmissions), connecting antenna ports 0 and 1 (e.g., PT0 and PT1, also referred to as U1 and U2) simultaneously may technically be beyond conventional SRS switching procedure and may not even be feasible, due to the PA architecture of the UE 105 (e.g., having PT0 connected to PT2 and having PT1 connected to PT3). For example, in conventional xTyR antenna switching, the selection of x ports out of y ports for each event of antenna switching may be up to (e.g., may depend on) UE implementation (e.g., UE architecture). In some embodiments, not all scenarios of freely selected x ports are switched at the UE 105. For example, a 2T4R antenna switching for a UE 105 with the architecture shown in FIG. 3, may be done (e.g., may be performed) through two switching events: (i) antenna switching event 1: transmission of a 2-port SRS resource via antenna ports {0,2}; and (ii) antenna switching event 2: transmission of a 2-port SRS resource via antenna ports {1,3}.

For such a UE 105 implementation (e.g., 2T4R), transmission of a 2-port SRS resource via antenna port mapping of {0,1}, {0,3}, {2,1}, and/or {2,3} may be beyond the antenna switching capability of the UE 105 (e.g., beyond the UE's legacy antenna switching capability). For example, the UE 105 (when configured for port 0 connected to port 2 and for port 1 connected to port 3) may not be able to switch to configurations where port 0 is connected to port 1, where port 0 is connected to port 3, where port 2 is connected to port 1, or where port 2 is connected to port 3. For such embodiments, a UE 105 capability (e.g., a new UE 105 capability) may be used (e.g., may be provided) for supported port mapping candidates depending on UE 105 implementation.

Alternatively, in some embodiments, the network node 110 (e.g., the gNB) may acquire information about one or more uplink-port channels through SRS antenna switching configuration. For example, in such embodiments, antenna switching may be performed with more configured SRS resources to give the UE 105 the flexibility of multiple port mapping opportunities for each specific xTyR switching configuration. In some embodiments, each xTyR switching configuration may have ( $\begin{matrix}y \\ x\end{matrix}$) possible switching events and a maximum of ( $\begin{matrix}y \\ x\end{matrix}$) configured SRS resources for flexibility (e.g., for full flexibility) of switching among all possible scenarios of antenna port mapping. As discussed above, possible switching events and configured SRS resources may be subject to the capabilities of a given UE 105 (e.g., may be subject to UE capability), such that a new UE capability (e.g., a UE 105 signaling capability) may be introduced to indicate the capabilities of a given UE 105.

In some embodiments, which may be applicable to slow fading channels (e.g., channels, which are not changing fast and can be assumed to be almost static, and where signal strength attenuates gradually due to shadowing from large obstacles), the network node 110 (e.g., the gNB) may acquire UL channel information for each UL port of the UE 105 through 1TyR switching configuration. In such embodiments, there may not be any change to conventional antenna switching configurations or switching procedures, in terms of the number of switching events and configured SRS resources. In such embodiments, antenna switching may have a high resource overhead and a lengthy switching procedure, which may be exposed to channel aging. Thus, such embodiments may be better suited to slow fading scenarios.

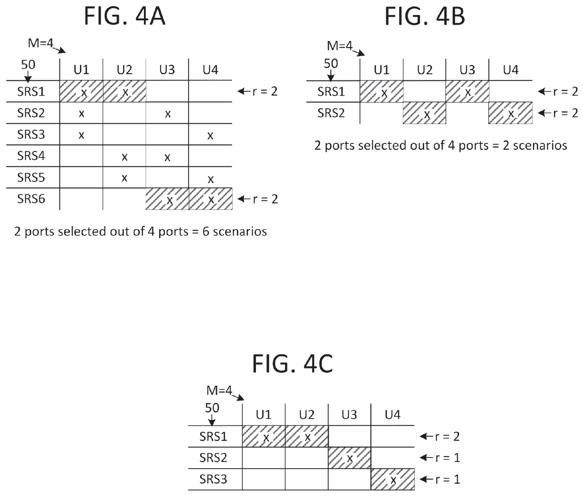

In summary, in some embodiments, the UE 105 may include x TX chains and y RX chains, with x and y being integers that are greater than one, and x being an integer that is less than y. In some embodiments, a first SRS resource and a second SRS resource, which are selected for UL transmission, may be two configured resources, in a given SRS-resource set, associated with a total number N of configured SRS resources (N being an integer greater than 0). In some embodiments, N may be a combination of y items taken x at a time. For example, the first SRS resource and the second SRS resource may be selected based on N being a combination of y items taken x at a time. In some embodiments, N may be equal to y/x, and the first SRS resource and the second SRS resource may be configured to be transmitted from different antenna units U. For example, in selecting two antenna units U of a given UE 105 having a total of four antenna units U (examples of which are discussed below with reference to FIG. 4A), the network node 110 (or the given UE 105) may compare potential signal qualities between the following 6 combinations with six SRS resources to be transmitted: (i) U1 and U2 via SRS resource 1; (ii) U1 and U3 via SRS resource 2; (iii) U1 and U4 via SRS resource 3; (iv) U2 and U3 via SRS resource 4; (v) U2 and U4 via SRS resource 5; and (vi) U3 and U4 via SRS resource 6. If U1 and U2 are determined to correspond with the highest signal quality (e.g., receptions of SRS resource 1 is determined to correspond with the highest signal quality), U1 and U2 may be selected for following UL transmission.

FIG. 4A is a table depicting selections of r antenna units U from among M antenna units U (e.g., U1 through U4) configured to transmit a relatively small number of configured SRS resources (e.g., SRS1 through SRS6), according to some embodiments of the present disclosure.

In some embodiments, as an alternative solution and to avoid relying on channel reciprocity for UL transmission port selection, a network node 110 (e.g., the gNB) may acquire the information about the uplink port-channels with a relatively small number of configured SRS resources where the indication signaling of the antenna port(s) selection by the network node 110 (e.g., the gNB) would no longer rely on one-to-one linkage with configured SRS resources and, thus, would no longer rely on SRI signaling (e.g., on legacy SRI signaling). In such embodiments, the network node 110 (e.g., the gNB) may configure a sufficient number of SRS resources for UL transmission (e.g., for codebook-based UL transmission) and/or for antenna switching use cases, to observe uplink channels corresponding to each of the antenna ports at the UE 105. Such embodiments may allow for flexibility (e.g., for full flexibility) at the network node 110 (e.g., at the gNB) to select any of the ( $\begin{matrix}M \\ r\end{matrix}$) possible candidates (as discussed above) for antenna port mappings for uplink transmission over r ports at a UE 105 with M antenna ports. In other words, in some embodiments, the selected SRS resources are configured to the antenna units U based on a combination of M items (e.g., M antenna units U) taken r at a time.

For example, and referring to FIG. 4A, the network node 110 may acquire the information about the antenna units U1 through U4 with SRS1 through SRS6 from the SRS-resource set 50. In the case of selecting r = 2 antenna units (e.g., ports) out of M = 4 antenna units, 6 scenarios (e.g., 6 selection options may be possible). For example, the UE may acquire information about with which ports to transmit, including transmitting: SRS1 with U1 and U2; SRS2 with U1 and U3; SRS3 with U1 and U4; SRS4 with U2 and U3; SRS5 with U2 and U4; and SRS6 with U3 and U4. In such embodiments, the UE 105 may be configured to perform UL transmissions with U1 and U2 or with U3 and U4 as non-overlapping (e.g., as different) sets of r antenna ports. In such embodiments, overhead may be relatively high due to the network node 110 observing all of the resources SRS1 through SRS6 before making a selection determination. However, such embodiments would offer greater flexibility in being able to select r from the combination of all scenarios.

FIG. 4B is a table depicting selections of r antenna units U from among M antenna units U (e.g., U1 through U4) configured to transmit a relatively smaller number of configured SRS resources (e.g., SRS1 and SRS2), according to some embodiments of the present disclosure.

In some embodiments, for codebook-based UL transmission, one solution for a UE 105 with M antenna ports, is to configure $\frac{M}{r}$ SRS resources, each resource to be transmitted from a non-overlapping set of r antenna ports at the UE. Such embodiments may respect (e.g., may comply with) the legacy 3GPP specification, where all configured SRS resources in one set have the same number of ports.

For example, and referring to FIG. 4A, the network node 110 may acquire the information about the antenna units U1 through U4 with only SRS1 and SRS2 from the SRS-resource set 50. In the case of selecting r = 2 antenna units (e.g., ports) out of M = 4 antenna units, 2 scenarios (e.g., 2 selection options may be possible). For example, the UE may acquire information (e.g., signal-strength information) about transmitting: SRS1 with U1 and U3; and SRS2 with U2 and U4. In such embodiments, the UE 105 may be configured to perform UL transmissions with U1 and U3 or with U2 and U4 as non-overlapping sets of r antenna ports having acceptable signal strengths. In such embodiments, overhead may be relatively low due to the network node 110 observing fewer resources (e.g., SRS1 and SRS2) before making a selection determination. However, such embodiments would offer less flexibility in being able to select r from the less than the combination of all scenarios.

FIG. 4C is a table depicting selections of different numbers of r antenna units U from among M antenna units U (e.g., U1 through U4), according to some embodiments of the present disclosure.

In some embodiments, as an alternative to the methods described above with reference to FIGS. 4A and 4B, some limitations may be relaxed to allow the network node 110 (e.g., the gNB) to configure resources with different numbers of ports in one set (e.g. *rᵢ* antenna ports for *i^{th}* SRS resource) such that the uplink channel corresponding to each antenna port of a given UE 105 may be observed at the network node 110 (e.g., the gNB) at least once (e.g. Σ*ᵢrᵢ* ≥ *M*)*.* The selected value of r may be subject to (e.g., may be limited by) the capabilities of a given UE 105 (e.g. when *rᵢ* = 3, 5, 6, *or* 7). In such embodiments, conventional antenna switching configuration and procedure, in terms of number of switching events and configured SRS resources, can be utilized (e.g., can be reused) with antenna switching usage. For example, in 2T4R transmission, the network node 110 (e.g., the gNB) can observe (e.g., can receive) the uplink channel from antenna ports 0 and 1 (also referred to as U1 and U2) via transmission of the first configured SRS resource while observing the uplink channel from antenna ports 2 and 3 (also referred to as U3 and U4) via transmission of the second configured SRS resource. The network node 110 (e.g., the gNB) may determine (e.g., may later decide) selection of UE 105 antenna ports 1 and 2, if suitable, based on having the full knowledge of uplink channels corresponding to all the UE's antenna ports.

Referring to FIG. 4C, in some embodiments, the applicability of conventional antenna switching usage may be extended by allowing the network node 110 (e.g., the gNB) to configure SRS resources with different numbers of non-overlapping antenna ports in one set, such as *rᵢ* antenna ports for *i^{th}* SRS resource where Σ*ᵢrᵢ* = *M.* For example, in some embodiments, the network node 110 may configure: SRS1 with two antenna ports (e.g., antenna units U1 and U2); SRS2 with one antenna port (e.g., antenna unit U3); and SRS3 with one antenna port (e.g., antenna unit U4). In such embodiments, the indication signaling of the antenna port selection by the network node 110 (e.g., the gNB) may no longer rely on legacy SRI signaling because there is no longer a one-to-one mapping between each port selection and each SRS resource. In legacy SRI signaling, the network node 110 signals SRS IDs, which implicitly implies r UE antenna ports that were used to send that SRS resource (noting that all SRS resources are transmitted with equal r ports). That is, different SRS resources may now be transmitted with different numbers of ports. As such, in some embodiments, the network node 110 may determine the r selected ports based on observing all ports and directly signal the r selected ports. In some embodiments, the indication signaling may be sent by the network node 110 via downlink control information (DCI), via a medium access control (MAC) control element (CE), or via a radio resource control (RRC) request.

In some embodiments, an application time (e.g., a time gap G, as depicted in FIG. 2B) between each of two consecutive UL transmissions 20 (e.g., two consecutive SRS transmissions) may be observed (e.g., may be provided) to allow the UE 105 to change and/or to switch port mapping for each UL transmission 20. In other words, in some embodiments, the UE 105 may perform a second UL transmission 20 (of two consecutive UL transmissions) based on complying with an application time to remap and/or to switch a corresponding antenna unit U. For example, in some embodiments, the application time between each of two consecutive SRS transmissions may be similar to the time gap Y provided between two SRS transmissions in antenna switching as in the current 3GPP specification. In some embodiments, the application time (e.g. in symbols or slots) between each of two consecutive UL transmissions 20 (e.g., two consecutive SRS transmissions) may be subject to UE 105 capability (e.g., may depend on the capabilities of a given UE 105) and may be the same as or larger than the antenna switching time gap due to the UE 105 having the flexibility to connect a TX chain to any antenna port at the UE 105, which may have some implementation impact on switching time.

In some embodiments, the network node 110 (e.g., the gNB) may acquire information (e.g., channel information) about one or more uplink-port channels through a recent non-codebook-based transmission. In some embodiments, the network node 110 (e.g., the gNB) may continuously (e.g., may repeatedly or periodically) observe UL data transmission performance and, when the network node 110 detects a degradation in UL data transmission performance, the network node 110 may respond (e.g., may react or respond explicitly) by notifying (e.g., by sending an indication to) the UE 105 of a suitable port remapping/switching via DCI and/or via MAC CE. Alternatively, in some embodiments, the network node 110 (e.g., the gNB) may respond (e.g., may react implicitly) through initiating and/or reconfiguring an antenna switching procedure or SRS resources for codebook-based UL transmission.

In some embodiments, after acquiring UL channel information (e.g., UL channel information corresponding to different UL ports), the network node 110 (e.g., the gNB) may determine port selection and may indicate the port selection to the UE 105 semi-statically (e.g., through RRC configuration). Alternatively, in some embodiments, the network node 110 may determine port selection and indicate the port selection to the UE 105 dynamically (e.g., through MAC CE and/or DCI). In some embodiments, the indication of port selection may be provided by an RRC parameter (e.g., a new RRC parameter). In some embodiments, the indication of port selection may be provided by a DCI/MAC CE field (e.g., a new and/or re-used DCI/MAC CE field) in a codepoint manner or in a bitmap manner. The codepoint manner may have less overhead than the bitmap manner. In some embodiments, the network node 110 may indicate port selection through SRI signaling (e.g., legacy SRI signaling). In some embodiments, the network node 110 may indicate port selection through signaling (e.g., through new signaling) designed for explicit indication of selected antenna ports. In embodiments utilizing SRI signaling, possible candidates (e.g., potential candidates) of UE antenna-port mappings and configured SRS resources may be linked one to one. In such embodiments, a relatively large number of SRS resources may be configured. In some embodiments utilizing signaling (e.g., new signaling) designed for explicit indication, SRS configuration (e.g., legacy SRS configuration) may be performed, and one-to-one linkage of possible candidates of UE 105 antenna port mappings and configured SRS resources may not necessarily be satisfied. In some embodiments, a bitmap structure or a code point structure based on a pre-defined rule and/or a look-up table may be provided (e.g., may be designed and provided) to indicate the selection of any possible candidates of antenna port mappings for uplink transmission over r ports at a given UE 105 with M antenna ports.

In some embodiments, as another alternative, an additional RRC parameter may be provided (e.g., may be introduced) for port indication of each configured SRS resource. In such embodiments, the additional RRC parameter may be provided either via a codepoint or a bitmap structure. In such embodiments, port configuration (e.g., configuration of the antenna units U) may be updated dynamically through MAC CE or DCI. In some embodiments, to simplify the design, a port re-indexing procedure may be used by which, aside from the end result of selected ports, the selected ports may be re-indexed in order (e.g., in an ascending order) of their port indexes to ports 0 through N (e.g., ports 0, 1, ... , N).

In some embodiments, in terms of RS design, UL RS (e.g., legacy UL RS, such as configured SRS with usage of codebook-based, antenna switching, non-codebook-based, and/or configured SRS resources for beam management) may be used for the UL RS measurement at the network node 110 (e.g., the gNB). In some embodiments, time domain characteristics of the SRS resources may be periodic, semi-persistent, and/or aperiodic.

As discussed above, it may take the UE 105 some time Y (e.g. in symbols, slots) to complete ports remapping (e.g., port remapping) and/or switching. In some embodiments, a ports remapping instance and/or a switching instance, and therefore a remapping gap and/or a switching gap (e.g., the application time, also referred to as the time gap G), may be tied to (e.g., provided at) the beginning of each specific uplink transmission.

Alternatively, in some embodiments, application of the remapping gap and/or switching gap (e.g., the application time, also referred to as the time gap G) may be tied to a slot or a sub-slot boundary, depending on the location of the upcoming uplink transmission utilizing ports remapping/switching. In some embodiments, the slot and/or the sub-slot boundary may be specified as only the beginning of the slot and/or sub-slot, only the end of the slot and/or sub-slot, or both the beginning and the end of the slot and/or the sub-slot. In some embodiments, as another alternative, the application of the remapping gap and/or switching gap may be associated with (e.g., may be tied to) the reception of the indication from the network node 110 (e.g., the gNB) and some additional specified time gap (e.g. X symbols or X slots). For example, in some embodiments, to prevent ambiguity and possible misalignment between the UE 105 and the network node 110 (e.g., the gNB), after a dynamic port-mapping update through the MAC CE and/or the DCI, a timeline of X (e.g. X symbols or X slots) can be RRC configured subject to UE 105 capability (e.g., depending on the capabilities of the given UE 105).

In some embodiments, to address the behavior of the UE 105 for the UL transmission 20, the UE 105 may transmit all of its UL channels and signals using a port mapping (e.g., a new port mapping) starting *X + Y* symbols or slots after reception of the MAC CE and/or after reception of the DCI. In some embodiments, the *X + Y* symbols or slots may be RRC configured and/or may be subject to UE 105 capability. In some embodiments, X may be based on (e.g., may be) a legacy activation timeline for the MAC CE, and it may be up to the network node 110 (e.g., the gNB) implementation to provide for the same port mapping for SRS transmissions and a following (e.g., a subsequent) PUSCH transmission (e.g., due to the fact that, in the current 3GPP specification, the PUSCH transmissions follow SRS transmission). For example, when the UE 105 is configured with the higher layer parameter *txConfig* set to *'codebook',* the UE 105 may be configured with at least one SRS resource that is transmitted prior to the scheduling DCI.

In some embodiments, if one SRS resource is configured, a transmitted precoding-matrix-indicator (TPMI) field in the scheduling DCI may be used to indicate the precoder to be applied over the layers for PUSCH transmission that corresponds to the single configured SRS resource. In some embodiments, if multiple SRS resources are configured, a transmitted precoding matrix indicator (TPMI) field in the scheduling DCI may be used to indicate the precoder to be applied over the layers for PUSCH transmission that correspond to the SRS resource selected by the SRI field in the same DCI.

In some embodiments, a number of antenna ports of uplink codebooks may be equal to a higher-layer parameter (e.g., *nrofSRS-Ports* in *SRS-Config*) and the UE 105 may transmit PUSCH using the same antenna ports as the SRS ports in the SRS resources indicated by the DCI format 0_1, 0_2, or 0_3 or by *configuredGrantConfig.* Therefore, the antenna ports for PUSCH transmission may follow (e.g., may correspond to) the same ports for SRS transmission.

In some embodiment, the UE 105 may wait to apply new port mapping on the transmission of the very next codebook-based SRS transmission that happens at least X+Y symbols or slots after the reception of the MAC CE and/or the DCI and, thus, after all the following (e.g., after all of the subsequent) UL channels transmissions.

In some embodiments, applicable to the examples discussed above, the value of Y, inside the timeline of X (e.g., added to *X*)*,* that is RRC configured (subject to UE 105 capability) may be implicitly included. In other words, in some embodiments, the network node 110 may implicitly provide the value Y to the UE. For example, the value of X may already include Y, such that only X is defined (e.g., only X is RRC configured and signaled), and Y is not defined separately (e.g., Y is not configured or signaled separately).

### UE-initiated Port Adaptation

As discussed above, in some embodiments, UE-initiated port adaptation may be configured, instead of network-node-determined port adaptation. UE-initiated port adaptation may be provided based on specification support (e.g., based on 3GPP specification support) indicating standards, for example, for RS design, for triggering-event definitions, for timeline framework, and/or for possible responses from the network node 110 (e.g., gNB). In some embodiments, a new RRC indication from the network node 110 (e.g., the gNB), as well as a new UE 105 capability signaling may be implemented to enable UE-initiated port adaptation (e.g., UE-initiated dynamic port-adaptation schemes).

In some embodiments, UE-initiated dynamic port adaptation may rely on channel reciprocity and DL RS reception. That is, UE-initiated dynamic port adaptation may differ from network -initiated port adaptation by assuming channel reciprocity, at least in part, and utilizing DL transmissions 10 (e.g., utilizing a quality of DL transmissions 10) to select antenna units U for UL transmissions 20. In some embodiments, the UE 105 may determine whether to remap antenna units U based on one or more triggering conditions (e.g., triggering-event conditions), including degradation of reception quality associated with currently used antenna units, improvement of reception quality associated with alternative antenna units, or comparison of measured signal quality values.

In some embodiments, in terms of RS design, DL RS (e.g., the legacy DL RS, such as configured SSB for intra-cell and/or inter-cell and/or CSI-RS resources for beam management) may be used (e.g., may be reused). In some embodiments, time domain characteristics of the CSI-RS resources for beam management may be periodic, semi-persistent, and/or aperiodic. In some embodiments, the DL RS may be configured in an explicit manner through using RRC configuration of RS measurement (e.g., through reusing legacy RRC configuration of RS measurement). In some embodiments, the DL RS may be configured in an explicit manner through indication by MAC-CE. Alternatively, in some embodiments, the DL RS may be implicitly derived from a quasi-co-location reference signal (QCL RS) of an indicated/activated TCI state or of the synchronization signal block (SSB), which is QCLed with the QCL RS in the indicated/activated TCI state. In addition, multi-port resources, such as CSI-RS resources for CSI acquisition or demodulation reference signal (DMRS), may be used as the DL RS measurement.

In some embodiments, the measurement quantity on the DL RS signals may be Layer 1 reference signal received power (L1-RSRP) and/or Layer 1 signal-to-interference-plus-noise ratio (L1-SINR) per receive port (e.g., per RX port). Based on the measurement results and a definition of triggering events, the UE 105 may change the mapping of physical ports to UL transmission ports.

In some embodiments, for the UE-initiated dynamic port adaptation, triggering-event conditions TEC (see FIG. 2B) may be defined, which may be configurable to the UE 105. Examples of configurable triggering events (e.g., triggering-event conditions TEC) include: (i) a quality of the reception via one or more current ports (e.g., current antenna units U) is worse than a threshold (e.g., a predetermined threshold); (ii) a quality of a reception via at least one new port, becomes better than (e.g., becomes a threshold value better than) the quality of a reception via a current port; (iii) a quality of a reception via one or more new ports is better than a threshold (e.g., a predetermined threshold); (iv) a quality of a reception via one or more current ports is worse than a threshold (e.g., a first threshold), and a quality of a reception via at least one new port is better than another threshold (e.g., the first threshold or a second threshold different from the first threshold); and (v) a quality of a reception via at least one new port becomes better than (e.g., becomes a threshold value better than) the qualities of ports having the M best qualities, M being an integer greater than or equal to one.

In some embodiments, the port qualities, for the triggering event definitions (i)-(v) discussed above, may refer to a signal strength (e.g., to an L1-RSRP measurement and/or to an L1-SINR measurement) on the received port for the configured and/or specified DL RS resources. In some embodiments, the threshold values, for the triggering event definitions (i)-(v) discussed above, may be pre-defined, RRC configured, or dynamically indicated to the UE 105 via DCI or via MAC CE.

In some embodiments, and applicable to the triggering event definitions (i)-(v) discussed above, a time window may be configured within which the number of measurement instances for at least one same new port is greater than or equal to a number (e.g., greater than or equal to a threshold value) that can be pre-defined or semi-statically configurable or dynamically indicated to the UE.

In some embodiments, if a triggering event (e.g., one of the triggering events defined above) occurs, the UE 105 may transmit a report to the network node 110 (e.g., to the gNB). In some embodiments, before transmitting the report to the network node 110 (e.g., the gNB), the UE 105 may notify the network node 110 (e.g., the gNB) of an upcoming report or may simply send a request to the network node 110 (e.g., the gNB) to dynamically allocate some uplink resources for an upcoming report. That is, in some embodiments, the UE 105 may send a UE-initiated notification or a request to the network node 110.

In some embodiments, the possible occasions to carry the UE-initiated notification or request may be pre-configured periodic occasions or semi-persistent occasions such as a one-bit or a multi-bit PUCCH resource configured by dedicated RRC signaling. For example, a dedicated scheduling request (SR) may be configured to be transmitted in the PUCCH resource, and the UE 105 may transmit the SR to notify or to obtain a grant for UL resources such as MAC-CE for the port reporting.

Alternatively, in some embodiments, uplink control information (UCI) (e.g., new UCI) may be introduced to be transmitted in the PUCCH resource. In some embodiments, dynamic PUSCH and/or configured grant (CG) PUSCH may be used to carry the UE-initiated notification or request. In some embodiments, the UL resource for the actual reporting content may be PUCCH and/or PUSCH channels, including dynamic PUSCH and/or CG PUSCH. The UE 105 may first send a request to the network node 110 to report the occurrence of a triggering-event condition TEC, based on an event corresponding to antenna switching/remapping occurring. Based on the network node 110 receiving the request, the network (e.g., via the network node 110) may allocate UL resources to the UE 105 for the UE 105 to send report content (e.g., to send a report including measurement information and/or selected port information). In some embodiments, the UL channel allocation for reporting may be pre-configured, and the UE 105 may send a notification to inform the network node 110 that the UE 105 will send a report. In such embodiments, if the network node 110 does not receive the notification from the UE 105, the network node 110 may reuse the pre-configured UL channel, originally allocated for reporting, for a different purpose so that the UL channel is not wasted.

In some embodiments, in which the UL resource for the actual reporting content is included in a PUCCH and/or a PUSCH, the network node 110 (e.g., the gNB) may send a dynamic UL grant through a bit field (through introduction of a new bit field) in DCI format 0_1, DCI format 0_2, and/or DCI format 0_3.

In some embodiments, the content of the report from the UE 105 may include (e.g., may be) an indication of remapping and/or switching. Alternatively, in some embodiments, the content of the report from the UE 105 may include N ports with all or at least K out of the N ports satisfying a configured triggering-event condition TEC. In some embodiments, the values of N and K may be semi-statically configured. In some embodiments, the values of N and K may be dynamically indicated to the UE 105. Alternatively, the UE 105 may determine the number of reported N ports or the number of K ports among the N ports that are reported to the network node 110 (e.g., the gNB). In some embodiments, the report may include the measured RSRP values or the SINR values corresponding to the reported ports. In some embodiments, an additional indication may be provided (in the port report from the UE 105) for which port has met the triggering-event condition TEC. The payload size of the UE 105 port report may be variable or may be fixed. In some embodiments, the report from the UE 105 may include the same number of ports (e.g., the same number of antenna units U) each time a report is sent. In some embodiments, the port report from the UE 105 may include a variable number of ports while keeping the total payload size constant (e.g., via a zero-padding mechanism).

Alternatively, in some embodiments, the UE 105 may perform a report-less scheme by sending only a notification to the network node 110 (e.g., to the gNB) about the triggered event at UE 105 and/or possibly to notify/inform the network node 110 (e.g., the gNB) of an actual remapping and switching at the UE 105. That is, in some embodiments, the report-less scheme may not include measured RSRP values or an indication of which ports have met a triggering-event condition TEC.

In some embodiments, after such reporting, the UE 105 may wait for a response from the network node 110 (e.g., from the gNB) for any possible port switching or remapping. The response from the network node 110 may be a simple acknowledgement or confirmation and/or implicit signaling for the reported port remapping or switching at the UE 105. Alternatively, the response from the network node 110 may include an explicit signaling to the UE 105 to change the UL port mapping. In some embodiments, to reduce port adaptation latency after a trigger-event notification or after a report is sent, the UE 105 may initiate (e.g., may autonomously initiate) and activate new port remapping or switching without a response from the network node 110 (e.g., the gNB) after a certain time period (e.g., a preconfigured time period) from report submission or right after report submission.

In some embodiments, it may take the UE 105 some time Y (e.g. in Y symbols or in Y slots) to complete the remapping and/or the switching. Such ports remapping and/or switching instance and therefore remapping and/or switching gap may be tied to the beginning of each specific uplink transmission. Alternatively, application of the remapping gap and/or switching gap, discussed above, may be associated with (e.g., tied to) the slot or sub-slot boundary, depending on the location of the upcoming uplink transmission with ports remapping/switching. In some embodiments, the slot and/or sub-slot boundary may be specified as only the beginning of the slot and/or sub-slot, only the end of the slot and/or sub-slot, or both beginning and end of the slot and/or sub-slot. In some embodiments, and as another alternative, the remapping gap and/or switching gap may be associated with (e.g., tied to) the reception of the indication from the network node 110 (e.g., the gNB) with consideration (e.g., with observation) of some additional specified time gap (e.g. X symbols or X slots). For example, to prevent ambiguity and possible misalignment between the UE 105 and the network node 110 (e.g., the gNB), a timeline of *X* (e.g. in X symbols or X slots) may be RRC configured, subject to UE capability (e.g., depending on the capabilities of the UE 105). In some embodiments, the behavior of the UE 105 for the UL transmission 20 may include transmitting, by the UE 105, all UL channels and signals using a port mapping (e.g., a new port mapping) starting *X + Y* symbols or slots after transmission of the port mapping report. In various embodiments, remapping or switching antenna units involves reconfiguring physical transmission paths within the UE, such as connecting transmission chains to different antenna elements or antenna panels. Such reconfiguration may affect radio-frequency propagation characteristics, spatial diversity, and interference behavior. Thus, the disclosed techniques modify operation of communication hardware rather than merely processing data.

In some embodiments, the UE-initiated dynamic port adaptation may be based on UE implementation (e.g., may be implemented by the UE 105). For example, the network node 110 (e.g., the gNB) may not configure a dedicated detecting event and/or may not configure a dedicated DL RS transmission. In such embodiments, the UE 105 may indicate to the network node 110 (e.g., to the gNB) through a capability signaling that the UE 105 may (e.g., is configured to) autonomously detect any degradation and apply antenna port remapping and/or switching. In other words, the UE 105 may indicate to the network node 110 that the UE 105 is capable of autonomous detection and antenna port remapping/switching. In such embodiments, the UE 105 may send a notification to the network node 110 (e.g., the gNB) of possible port remapping/switching and may apply new port mapping for one or more (e.g., for all) UL transmissions 20 occurring X+Y symbols or slots after the transmission of the notification to the network node 110 (e.g., to the gNB) (e.g., within a given time period). In some embodiments, the value of Y may be implicitly included inside the timeline of X (as discussed above) that is RRC configured subject to the capabilities of the UE 105. In some embodiments, the capability signaling may further identify supported combinations of antenna units. Due to hardware architecture constraints, the UE 105 may support only a subset of possible combinations of antenna units for simultaneous uplink transmission. The UE 105 may transmit capability information identifying supported combinations, and the network node 110 may configure SRS resources and determine antenna-unit selection based on the supported combinations.

In the current 3GPP specification, PUSCH transmissions follow SRS transmission. For example, when the UE 105 is configured with the higher-layer parameter *txConfig* set to *'codebook',* the UE 105 is configured with at least one SRS resource that is transmitted prior to the scheduling DCI. If one SRS resource is configured, the TPMI field in the scheduling DCI may be used to indicate the precoder to be applied over the layers for the PUSCH transmission that corresponds to the single configured SRS resource. Otherwise, if multiple SRS resources are configured, the TPMI field in the scheduling DCI is used to indicate the precoder to be applied over the layers for the PUSCH transmission that corresponds to the SRS resource selected by the SRI field in the same DCI. The number of antenna ports of uplink codebooks may be equal to the higher-layer parameter *nrofSRS-Ports* in *SRS-Config* and the UE 105 may transmit PUSCH using the same antenna ports as the SRS ports in the SRS resources indicated by the DCI format 0_1, 0_2, or 0_3 or by *configuredGrantConfig.* Therefore, one or more antenna ports for PUSCH transmission may follow the same one or more ports for SRS transmission. Therefore, in some embodiments, as an alternative solution, when no notification is sent to the network node 110 (e.g., to the gNB), the UE 105 may wait to apply new ports mapping on the transmission of the very next SRS transmission with configured usage of codebook-based and, thus, on one or more (e.g., all) of the following UL channel transmissions (e.g., within a given time period).

In some embodiments, because the source RS of an uplink transmission-configuration-indicator (UL TCI) state is either SRS for beam management or DL RS (e.g. SSB, CSI-RS for tracking, or CSI-RS for beam management) and because the UE's newly selected UL ports may be assumed to be a same set or a same subset of DL ports, the UE 105 may be able to figure out (e.g., to determine) the quasi-colocation type D (QCL-D) information for UL transmission 20 using the new port mapping.

### Antenna Panel Adaptation for High Frequency UL Transmission

In high-frequency scenarios (e.g., in FR2 scenarios), the problem of antenna port selection at the UE 105 may be simplified to antenna panel (e.g., antenna array) selection at the UE 105. In some embodiments, the UE 105 may perceive a panel of the UE 105 as a logical entity and may determine how to map physical antennas to the logical entity. Therefore, in some embodiments, multiple UL panels at the UE 105 may be interpreted as multiple antenna port mapping capabilities at UE. In other words, a UE 105 may perform antenna panel mapping in a manner that is analogous to antenna port mapping (e.g., with each port corresponding to a panel of antennas). In some embodiments, antenna panels may correspond to groups of antenna ports, and selection of antenna panels may be performed analogously to antenna-port mapping, such that panel selection corresponds to logical port selection.

In some systems, the UE 105 may rely on channel reciprocity and a DL RS measurement to select suitable uplink panels (e.g., to select the best uplink panels) from among a plurality of uplink panels (e.g., from a plurality of antenna units U) for a UL transmission 20. However, as discussed above, the assumption of channel reciprocity may not always be valid (e.g., may not be correct), and a UL transmission may be significantly degraded due to possibly different interference conditions between DL transmissions 10 and UL transmissions 20, such as in MU-MIMO and in inter-cell interference scenarios.

In some embodiments, as similarly discussed above with respect to network-node initiated port adaptation, to provide behavioral and timeline guidelines for panel selection (e.g., for selection of antenna units U in the form of antenna panels), enough SRS resources may be configured for codebook-based UL transmission to provide flexibility for all antenna panels at the UE 105. Such embodiments may have increased (e.g., significantly increased) resource overhead. Accordingly, the number of configured SRS resources may be selected to balance uplink performance improvement and signaling overhead. In some embodiments, fewer SRS resources may be configured to reduce overhead, while still enabling flexible antenna-unit selection.

In Release 15 of the 3GPP specification (Rel-15), a beam specific power-head room-report (PHR) reporting was introduced, in which the UE 105 would report the difference between maximum transmit power (*P_{c,max}* each beam to allow the network node 110 (e.g., the gNB) to optimize uplink resource allocation and power control. In Release 16 of the 3GPP specification (Rel-16), there were some discussions and specification efforts regarding event-triggered power-management maximum-power-reduction- (P-MPR-) based reporting, which was mainly motivated to address a maximum permissible-exposure (MPE) issue due to human body blockage. To prevent harm to human bodies, due to radio-wave exposure, each UE 105 may detect if a human body is in close proximity (e.g. through a triggered MPE event) and may apply a power reduction accordingly. The power reduction may further adversely impact the reciprocity assumption of the channel (e.g., may adversely impact the assumption of channel reciprocity), such that the DL RS measurement of the UE 105 would no longer reflect (e.g., would not accurately represent) the UL transmission environment. In Release 17 of the 3GPP specification (Rel-17), event-triggered P-MPR-based reporting was extended to N≥1 P-MPR values to be reported together, each P-MPR value having up to one synchronization signal/physical broadcast channel (SS/PBCH) block resource indicator (SSBRI) or up to one CSI-RS resource indicator (CRI) selected, by the UE 105, from a candidate SSB/CSI-RS resource pool. The N≥1 P-MPR values reported together enable the network node 110 (e.g., the gNB) to determine (e.g., to better determine) beam-specific MPE impact and to improve (e.g., to optimize) uplink resource allocation for each beam individually. Additionally, in Rel-17, UE-initiated UL panel selection was introduced through a new UE capability to implicitly indicate UE panel selection via a maximum supported number of SRS port indices, additionally reported inside the beam measurement reporting. Therefore, the current 3GPP specification provides limited support of UE-initiated dynamic panel adaptation. For example, in terms of RS design, SSB and/or CSI-RS resources for beam management are used, and the measurement quantity on such DL RS signals are L1-RSRP and/or L1-SINR.

In some embodiments of the present disclosure, the framework of the 3GPP specification may be extended, such that multi-port resources such as CSI-RS resources for CSI acquisition or DMRS may be utilized as the DL RS measurement. In some embodiments, the DL RS may be configured in an explicit manner through RRC configuration of RS measurement (e.g., through reusing legacy RRC configuration of RS measurement). In some embodiments, the DL RS may be configured in an explicit manner through indication by MAC-CE. Alternatively, in some embodiments, the DL RS may be implicitly derived from a QCL RS of an indicated/activated TCI state or from the SSB that is QCL-ed with the QCL RS in the indicated/activated TCI state. In addition, in some embodiments, DL RS time-domain characteristics may be periodic, semi-persistent, and/or aperiodic.

In some embodiments, for the antenna panel adaptation, triggering event conditions may be defined, which may be configurable to the UE 105. Examples of configurable triggering events, may be analogous the triggering-event conditions TEC discussed above for UE-initiated dynamic port adaptation, and may include: (i) a quality of a reception via one or more current panels is worse than a threshold (e.g., a predetermined threshold); (ii) a quality of a reception via at least one new panel, becomes better (e.g., becomes a threshold value better) than the quality of a reception via a current panel; (iii) a quality of a reception via one or more new panels is better than a threshold (e.g., a predetermined threshold); (iv) a quality of a reception via one or more current panels is worse than a first threshold, and a quality of a reception via at least one new panel is better than a second threshold (e.g., a second threshold that is the same as or different from the first threshold); and (v) a quality of a reception via at least one new panel becomes better (e.g., a threshold value better) than the reception qualities of panels having the M best qualities, M being an integer greater than or equal to one.

In some embodiments, and applicable to the triggering event definitions (i)-(v) discussed above, a time window may be configured within which the number of measurement instances for at least one same new panel is greater than or equal to a number (e.g., greater than or equal to a threshold value) that can be pre-defined or semi-statically configurable or dynamically indicated to the UE 105. In some embodiments, the quality of the reception of the panel, discussed above in the triggering-event-condition definitions, may refer to an L1-RSRP and/or an L1-SINR measurement on that receiving panel for the configured and/or for the specified DL RS resources. In some embodiments, the threshold values, discussed above in the triggering event definitions, may be pre-defined, RRC configured, or dynamically indicated to the UE 105 via DCI or MAC CE.

In some embodiments, if a triggering-event condition TEC (e.g., one of the triggering events defined above) occurs, the UE 105 may transmit a report to the network node 110 (e.g., to the gNB). In some embodiments, before transmitting the report to the network node 110 (e.g., to the gNB), the UE 105 may notify the network node 110 (e.g., the gNB) of an upcoming report or may simply send a request to the network node 110 (e.g., the gNB) to dynamically allocate some uplink resources for an upcoming report. That is, the UE 105 may send a UE-initiated notification or a request to the network node 110.

In some embodiments, the possible occasions to carry the UE-initiated notification or request may be pre-configured periodic occasions or semi-persistent occasions such as a one-bit or a multi-bit PUCCH resource configured by dedicated RRC signaling. For example, a dedicated scheduling request (SR) may be configured to be transmitted in the PUCCH resource, and the UE 105 may transmit the SR to notify or to obtain a grant for UL resources such as MAC-CE for the panel reporting.

Alternatively, in some embodiments, uplink control information (UCI) (e.g., a new UCI) may be introduced to be transmitted in the PUCCH resource. In some embodiments, dynamic PUSCH and/or configured grant (CG) PUSCH may be used to carry the UE-initiated notification or request. In some embodiments, the UL resource for the actual reporting content may be PUCCH and/or PUSCH channels, including dynamic PUSCH and/or CG PUSCH.

In some embodiments, in which the UL resource for the actual reporting content is included in a PUCCH and/or PUSCH, the network node 110 (e.g., the gNB) behavior may be to perform a dynamic UL grant through a bit field (through introduction of a new bit field) in DCI format 0_1, DCI format 0_2, and/or DCI format 0_3.

In some embodiments, the content of the report from the UE 105 (e.g., the UE report) may include (e.g., may be) an indication of panel switching (e.g., an indication of an actual remapping and/or an actual switching of one or more antenna units U at the UE 105). Alternatively, in some embodiments, the report (e.g., the content of the report) may include N panels where all or at least K out of the N ports satisfy a configured triggering event (e.g., satisfy a triggering-event condition TEC). In some embodiments, the values of N and K may be semi-statically configured. In some embodiments, the values of N and K may be semi-statically configured or dynamically indicated to the UE 105. Alternatively, in some embodiments, the UE 105 may determine the number of reported N panels or the number of K panels, from among the N panels, that satisfy an event condition (e.g., that satisfy a triggering-event condition TEC). In some embodiments, the report may include the measured RSRP values or the SINR values corresponding to the reported panels. In some embodiments, an additional indication may be provided, in the UE 105 panel report, of the panel that has met (e.g., satisfied) the triggering-event condition TEC. The payload size of the UE 105 panel report may be variable or may be fixed. In some embodiments, the UE 105 panel report may include the same number of panels being reported each time a report is sent. In some embodiments, the UE 105 panel report may include a variable number of panels while keeping the total payload size constant (e.g., via a zero-padding mechanism).

Alternatively, in some embodiments, the UE 105 may perform a report-less scheme by sending only a notification to the network node 110 (e.g., the gNB) about the triggered event (e.g., the triggering-event condition TEC) at the UE 105 and/or possibly to notify/inform the network node 110 (e.g., the gNB) of an actual panel switching at the UE 105.

In some embodiments, after such reporting, the UE 105 may wait for a response from the network node 110 (e.g., from the gNB) for any possible panel switching. The response from the network node 110 may be a simple acknowledgement or confirmation and/or implicit signaling for that reported panel switching at the UE 105. Alternatively, the response from the network node 110 may include an explicit signaling to the UE 105 to change the UL panels. In some embodiments, to reduce panel adaptation latency after a trigger-event notification or a report is sent, the UE 105 may initiate (e.g., may autonomously initiate) and activate new panel switching without a response from the network node 110 (e.g., the gNB) after a certain time period (e.g., a preconfigured time period) from report submission or right after report submission.

In some embodiments, it may take the UE 105 some time Y (e.g. in Y symbols or in Y slots) to complete the switching. Such panel switching instance and therefore remapping and/or switching gap may be tied to the beginning of each specific uplink transmission. Alternatively, application of the remapping gap and/or switching gap, as discussed above, may be associated with (e.g., tied to) the slot or sub-slot boundary, depending on the location of the upcoming uplink transmission with panel remapping/switching.

In some embodiments, the slot and/or sub-slot boundary may be specified as only the beginning of the slot and/or sub-slot, only the end of the slot and/or sub-slot, or both beginning and end of the slot and/or sub-slot. In some embodiments, as another alternative, the remapping gap and/or switching gap (e.g., the timing gap G) may be associated with (e.g., tied to) the reception of the indication from the network node 110 (e.g., the gNB) with consideration of some additional specified time gap (e.g. X symbols or X slots). For example, to prevent ambiguity and possible misalignment between the UE 105 and the network node 110 (e.g., the gNB), a switching timeline of *X* (e.g. in X symbols or X slots) may be RRC configured, subject to UE capability (e.g., depending on the capabilities of the UE 105). In some embodiments, the UE 105 behavior for the UL transmission 20 may include transmitting, by the UE 105, all UL channels and signals using one or more new panels starting *X + Y* symbols or slots (RRC configured and/or subject to UE 105 capability) after transmission of the panel switching report. In some embodiments, the defined application time for antenna-unit remapping ensures coordinated operation between the UE 105 and the network node 110, preventing transmission misalignment and reducing transmission errors. By controlling when hardware switching occurs relative to uplink transmissions, the disclosed techniques may relatively improve synchronization and reduce degradation caused by inconsistent antenna configurations.

In some embodiments, an RRC indication (e.g., a new RRC indication) from the network node 110 (e.g., the gNB), as well as a UE capability signaling (e.g., a new UE 105 capability signaling) may be used to enable a UE-initiated dynamic panel-adaptation scheme.

In some embodiments, the UE-initiated dynamic port adaptation may be based on UE implementation (e.g., may be implemented by the UE 105). For example, the network node 110 (e.g., the gNB) may not configure a dedicated detecting event and/or may not configure a dedicated DL RS transmission. In such embodiments, the UE 105 may indicate to the network node 110 (e.g., to the gNB) through a capability signaling that the UE 105 may autonomously detect any degradation and apply panel switching. In other words, the UE 105 may indicate to the network node 110 that the UE 105 is capable of autonomous detection and panel switching. In such embodiments, the UE 105 may send a notification to the network node 110 (e.g., to the gNB) of possible panel switching and may apply the new panels for one or more (e.g., for all) UL transmissions occurring X+Y symbols or slots after the transmission of the notification to the network node 110 (e.g., to the gNB) (e.g., within a given time period). In some embodiments, the value of Y may be implicitly included inside the timeline of X (as discussed above) that is RRC configured subject to UE 105 capability.

In the current 3GPP specification, the PUSCH transmissions follow SRS transmission. That is, the antenna panels used for PUSCH transmission follow the same panels for SRS transmission. Therefore, in some embodiments, no notification is sent to the network node 110 (e.g., to the gNB) and the UE 105 may wait to apply new panel mapping on the transmission of the very next SRS transmission with configured usage of codebook-based and, thus, all the following UL channel transmissions (e.g., within a given time period).

In some embodiments, to avoid relying on channel reciprocity for UL-transmission panel selection, the network node 110 (e.g., the gNB) may acquire information about the uplink panel channels through configuring enough SRS resources, such as for codebook-based UL transmission and/or for antenna switching use cases, to provide flexibility for all or most antenna panels. In some embodiments, an application time (e.g., the time gap G) may be provided between each of two consecutive SRS transmissions to allow the UE 105 to change/switch panels for each UL transmission 20 (e.g., for each SRS transmission). The time gap G between each of two consecutive SRS transmissions may be subject to UE 105 capability (e.g., may depend on the capabilities of a given UE 105) and may be the same as or larger than the antenna switching time gap. Because UL transmission via multiple antenna panels at the UE 105 can be related to the PA architecture of the UE 105 and/or to the coherency capability of the UE 105, a new UE capability may be provided (e.g., may be introduced). For example, a codebook-based UL transmission over two panels may require connecting those panels simultaneously, which may not be feasible due to the PA architecture of a given UE 105.

In some embodiments, the configured SRS resources may correspond to candidate combinations of antenna units selected from a plurality of antenna units at the UE 105. For example, when the UE 105 includes M antenna units and uplink transmission utilizes r antenna units, the configured SRS resources may correspond to candidate combinations of r antenna units selected from the M antenna units. Such configurations may enable the network node 110 to evaluate multiple candidate antenna-unit mappings and select a mapping that improves uplink transmission performance. In some embodiments, each SRS resource may correspond to a different candidate combination. In other embodiments, fewer SRS resources may be configured and the network node 110 may determine antenna-unit combinations based on measurements corresponding to individual antenna units or subsets thereof.

In some embodiments, after acquiring UL channel information (e.g., UL channel information corresponding to different UL panels), the network node 110 (e.g., the gNB) may determine panel selection and indicate the panel selection to the UE 105 semi-statically (e.g., through RRC configuration) or dynamically (e.g., through MAC CE and/or DCI). In some embodiments, the indication of the panel selection may be based on an RRC parameter (e.g., a new RRC parameter) or based on a DCI/MAC CE field (e.g., a new and/or re-used DCI/MAC CE field) in a codepoint manner or in a bitmap manner. The codepoint manner may have less overhead (e.g., may be implemented with less overhead). In some embodiments, as another alternative, an additional RRC parameter for panel indication of each configured SRS resource may be provided (e.g., may be introduced). The additional RRC parameter may be provided either via a codepoint or a bitmap structure. In some embodiments, to simply the design, a panel re-indexing procedure may be used. In some embodiments, such panel configuration may be further updated dynamically through MAC CE or DCI. In some embodiments, a timeline of X may be RRC configured subject to capabilities of the UE 105, such that UE 105 may transmit one or more (e.g., may transmit all UL channels) and signals using one or more new panels starting X+Y symbols or slots after reception of a MAC CE and/or of a DCI. In some embodiments, it may be up to the network node 110 (e.g., the gNB) implementation to ensure that the same panels are used for SRS transmissions and for the following PDSCH transmission. In other words, in some embodiments, the network node 110 may enable the use of the same panels for one or more SRS transmissions and corresponding one or more PDSCH transmissions (following the SRS transmissions). In some embodiments, the UE 105 may wait to apply the new panels on the transmission of the very next codebook-based SRS transmission that happens at least X+Y symbols or slots after a reception of MAC CE and/or DCI and, thus, all the following UL channels transmissions (e.g., within a given time period). In some embodiments, the value of Y may be implicitly included inside the timeline of X that is RRC configured subject to the capabilities of the UE 105 (as discussed above).

FIG. 5 is a block diagram of an electronic device 501 in a network environment 500, according to some embodiments of the present disclosure.

Referring to FIG. 5, the electronic device 501 (e.g., a UE) in the network environment 500 may communicate with an electronic device 502 via a first network 598 (e.g., a short-range wireless communication network), or an electronic device 504 or a server 508 via a second network 599 (e.g., a long-range wireless communication network). The electronic device 501 may communicate with the electronic device 504 via the server 508. The electronic device 501 may include a processor 520, a memory 530, an input device 550, a sound output device 555, a display device 560, an audio module 570, a sensor module 576, an interface 577, a haptic module 579, a camera module 580, a power management module 588, a battery 589, a communication module 590, a subscriber identification module (SIM) card 596, or an antenna module 597. In one embodiment, at least one (e.g., the display device 560 or the camera module 580) of the components may be omitted from the electronic device 501, or one or more other components may be added to the electronic device 501. Some of the components may be implemented as a single integrated circuit (IC). For example, the sensor module 576 (e.g., a fingerprint sensor, an iris sensor, or an illuminance sensor) may be embedded in the display device 560 (e.g., a display).

The processor 520 may execute software (e.g., a program 540) to control at least one other component (e.g., a hardware or a software component) of the electronic device 501 coupled with the processor 520 and may perform various data processing or computations.

As at least part of the data processing or computations, the processor 520 may load a command or data received from another component (e.g., the sensor module 576 or the communication module 590) in volatile memory 532, process the command or the data stored in the volatile memory 532, and store resulting data in non-volatile memory 534. The processor 520 may include a main processor 521 (e.g., a central processing unit (CPU) or an application processor (AP)), and an auxiliary processor 523 (e.g., a graphics processing unit (GPU), an image signal processor (ISP), a sensor hub processor, or a communication processor (CP)) that is operable independently from, or in conjunction with, the main processor 521. Additionally or alternatively, the auxiliary processor 523 may be adapted to consume less power than the main processor 521, or execute a particular function. The auxiliary processor 523 may be implemented as being separate from, or a part of, the main processor 521.

The auxiliary processor 523 may control at least some of the functions or states related to at least one component (e.g., the display device 560, the sensor module 576, or the communication module 590) among the components of the electronic device 501, instead of the main processor 521 while the main processor 521 is in an inactive (e.g., sleep) state, or together with the main processor 521 while the main processor 521 is in an active state (e.g., executing an application). The auxiliary processor 523 (e.g., an image signal processor or a communication processor) may be implemented as part of another component (e.g., the camera module 580 or the communication module 590) functionally related to the auxiliary processor 523.

The memory 530 may store various data used by at least one component (e.g., the processor 520 or the sensor module 576) of the electronic device 501. The various data may include, for example, software (e.g., the program 540) and input data or output data for a command related thereto. The memory 530 may include the volatile memory 532 or the non-volatile memory 534. Non-volatile memory 534 may include internal memory 536 and/or external memory 538.

The program 540 may be stored in the memory 530 as software, and may include, for example, an operating system (OS) 542, middleware 544, or an application 546.

The input device 550 may receive a command or data to be used by another component (e.g., the processor 520) of the electronic device 501, from the outside (e.g., a user) of the electronic device 501. The input device 550 may include, for example, a microphone, a mouse, or a keyboard.

The sound output device 555 may output sound signals to the outside of the electronic device 501. The sound output device 555 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 560 may visually provide information to the outside (e.g., a user) of the electronic device 501. The display device 560 may include, for example, a display, a hologram device, or a projector and control circuitry to control a corresponding one of the display, hologram device, and projector. The display device 560 may include touch circuitry adapted to detect a touch, or sensor circuitry (e.g., a pressure sensor) adapted to measure the intensity of force incurred by the touch.

The audio module 570 may convert a sound into an electrical signal and vice versa. The audio module 570 may obtain the sound via the input device 550 or output the sound via the sound output device 555 or a headphone of an external electronic device 502 directly (e.g., wired) or wirelessly coupled with the electronic device 501.

The sensor module 576 may detect an operational state (e.g., power or temperature) of the electronic device 501 or an environmental state (e.g., a state of a user) external to the electronic device 501, and then generate an electrical signal or data value corresponding to the detected state. The sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 577 may support one or more specified protocols to be used for the electronic device 501 to be coupled with the external electronic device 502 directly (e.g., wired) or wirelessly. The interface 577 may include, for example, a high- definition multimedia interface (HDMI), a universal serial bus (USB) interface, a secure digital (SD) card interface, or an audio interface.

A connecting terminal 578 may include a connector via which the electronic device 501 may be physically connected with the external electronic device 502. The connecting terminal 578 may include, for example, an HDMI connector, a USB connector, an SD card connector, or an audio connector (e.g., a headphone connector).

The haptic module 579 may convert an electrical signal into a mechanical stimulus (e.g., a vibration or a movement) or an electrical stimulus which may be recognized by a user via tactile sensation or kinesthetic sensation. The haptic module 579 may include, for example, a motor, a piezoelectric element, or an electrical stimulator.

The camera module 580 may capture a still image or moving images. The camera module 580 may include one or more lenses, image sensors, image signal processors, or flashes. The power management module 588 may manage power supplied to the electronic device 501. The power management module 588 may be implemented as at least part of, for example, a power management integrated circuit (PMIC).

The battery 589 may supply power to at least one component of the electronic device 501. The battery 589 may include, for example, a primary cell which is not rechargeable, a secondary cell which is rechargeable, or a fuel cell.

The communication module 590 may support establishing a direct (e.g., wired) communication channel or a wireless communication channel between the electronic device 501 and the external electronic device (e.g., the electronic device 502, the electronic device 504, or the server 508) and performing communication via the established communication channel. The communication module 590 may include one or more communication processors that are operable independently from the processor 520 (e.g., the AP) and supports a direct (e.g., wired) communication or a wireless communication. The communication module 590 may include a wireless communication module 592 (e.g., a cellular communication module, a short-range wireless communication module, or a global navigation satellite system (GNSS) communication module) or a wired communication module 594 (e.g., a local area network (LAN) communication module or a power line communication (PLC) module). A corresponding one of these communication modules may communicate with the external electronic device via the first network 598 (e.g., a short-range communication network, such as BLUETOOTH^{™}, wireless-fidelity (Wi-Fi) direct, or a standard of the Infrared Data Association (IrDA)) or the second network 599 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 592 may identify and authenticate the electronic device 501 in a communication network, such as the first network 598 or the second network 599, using subscriber information (e.g., international mobile subscriber identity (IMSI)) stored in the SIM card 596.

The antenna module 597 may transmit or receive a signal or power to or from the outside (e.g., the external electronic device) of the electronic device 501. The antenna module 597 may include one or more antennas, and, therefrom, at least one antenna appropriate for a communication scheme used in the communication network, such as the first network 598 or the second network 599, may be selected, for example, by the communication module 590 (e.g., the wireless communication module 592). The signal or the power may then be transmitted or received between the communication module 590 and the external electronic device via the selected at least one antenna.

Commands or data may be transmitted or received between the electronic device 501 and the external electronic device 504 via the server 508 coupled with the second network 599. Each of the electronic devices 502 and 504 may be a device of a same type as, or a different type, from the electronic device 501. All or some of operations to be executed at the electronic device 501 may be executed at one or more of the external electronic devices 502, 504, or 508. For example, if the electronic device 501 should perform a function or a service automatically, or in response to a request from a user or another device, the electronic device 501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 501. The electronic device 501 may provide the outcome, with or without further processing of the outcome, as at least part of a reply to the request. To that end, a cloud computing, distributed computing, or client-server computing technology may be used, for example.

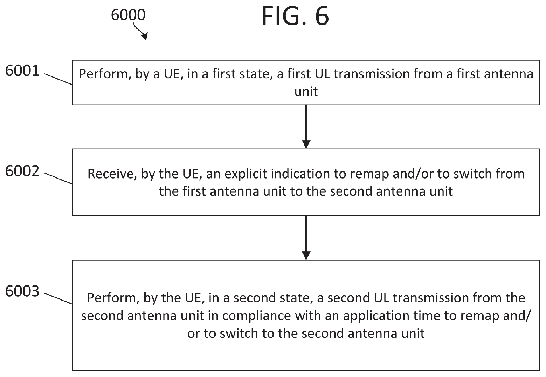

As discussed above, the processing circuit 120 (see FIG. 1), may perform the various methods disclosed herein and may correspond to the processor 520 discussed above with reference to FIG. 5. For example, the processor 520 may perform the method 6000, which is discussed in further detail below with reference to FIG. 6.

FIG. 6 is a flowchart depicting example operations of the method 6000 for performing antenna unit (e.g., antenna port or antenna panel) adaptation for UL transmission, according to some embodiments of the present disclosure. Although FIG. 6 illustrates various operations in a method for port or panel adaptation for UL transmission, embodiments according to the present disclosure are not limited thereto, and according to various embodiments, the method may include additional operations, or fewer operations, or the order of operations may vary, unless otherwise stated or implied, without departing from the spirit and scope of embodiments according to the present disclosure.

Referring to FIG. 6, the method 6000 may include one or more of the following operations. The UE 105 may perform, in a first state, a first UL transmission from a first antenna unit (e.g., U1 and/or U2 of FIGS. 2A and 2B) (operation 6001).

For example, as discussed above with reference to FIGS. 2A and 2B, in the first state S1, the UE 105 may perform the first UL transmission 20a using the first antenna unit U1 and the second antenna unit U2, based on the network node 110 determining that sending SRS1 using both the first antenna unit U1 and the second antenna unit U2 results in an acceptable performance characteristic

The UE 105 may receive an explicit indication to remap and/or to switch to a second antenna unit (e.g., U3 and/or U4), the second antenna unit (e.g., U3 and/or U4) being different from (e.g., being non-overlapping with) the first antenna unit (e.g., U1 and/or U2) (operation 6002).

For example, as discussed above, the network node 110 may indicate port selection through signaling designed for explicit indication of selected antenna ports.

The UE 105 may perform, in a second state, a second UL transmission from a second antenna unit, in compliance with an application time for remapping and/or switching (operation 6003). The application time may be based on the UE's capabilities (e.g., based on one or more capabilities of the UE 105).

For example, as discussed above with reference to FIG. 2B, the UE 105 may send the second UL transmission 20b based on complying with the time gap G (e.g., a configured time gap).

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method comprising:
performing (6001), by a user equipment, (UE, (105) in a first state (S1), a first uplink, UL, transmission (20a) from a first antenna unit (U1, U2);
performing (6003), by the UE (105), in a second state (S2), a second UL transmission (20b) from a second antenna unit (U3, U4); and
receiving (6002), by the UE (105), an explicit indication to remap and/or to switch from the first antenna unit (U1, U2) to the second antenna unit (U3, U4), the second antenna unit (U3, U4) being different from the first antenna unit (U1, U2).

2. The method of claim 1, wherein the UE (105) comprises x transmission, TX, chains and y reception, RX, chains, x and y being integers that are greater than one, and x being an integer that is less than y.

3. The method of claim 1 or 2, wherein:
the first antenna unit (U1, U2) is configured to transmit a first sound reference signal, SRS, resource (SRS1) of a first SRS-resource set (50); and
the second antenna unit (U3, U4) is configured to transmit a second SRS resource (SRS6) of the first SRS-resource set (50).

4. The method of claim 3, wherein the first SRS resource (SRS1) and the second SRS resource (SRS6) are two configured SRS resources, in the first SRS-resource set (50), associated with a same number of antenna units, the first SRS resource (SRS1) and the second SRS resource (SRS6) being configured to be transmitted from different antenna units.

5. The method of claim 3, wherein the first SRS resource and the second SRS resource are two configured SRS resources, in the first SRS-resource set (50), associated with different numbers of antenna units, the first SRS resource and the second SRS resource being configured to be transmitted from different antenna units.

6. The method of any one of claims 1 to 5, wherein an application time of the explicit indication to remap and/or to switch from the first antenna unit (U1, U2) to the second antenna unit (U3, U4) is based on one or more capabilities of the UE (105).

7. The method of claim 6, wherein the explicit indication to remap and/or to switch the second antenna unit (U3, U4) is based on an index of the second antenna unit and/or is based on a one-to-one linkage of antenna unit selection with configured SRS resources.

8. The method of any one of claims 1 to 7, wherein:
the first UL transmission (20a) and the second UL transmission (20b) are consecutive transmissions; and
the UE (105) performs the second UL transmission (20b) based on complying with an application time to remap and/or to switch to the second antenna unit (U3, U4).

9. The method of any one of claims 1 to 8, further comprising:
sending, by the UE (105), information indicating one or more supported antenna unit mapping candidates.

10. The method of any one of claims 1 to 9, further comprising:
sending, by the UE (105), a UE-capability signal indicating that the UE (105) is capable of performing event-based remapping and/or event-based switching based on a triggering-event condition being satisfied,
wherein the triggering-event condition comprises:
a quality of a reception via one or more current antenna units is worse than a threshold; or
a quality of a reception via at least one new antenna unit is a threshold value better than a quality of a reception via a current antenna unit; or
a quality of a reception via one or more new antenna units is better than a threshold; or
a quality of a reception via one or more current antenna units is worse than a first threshold, and a quality of a reception via at least one new antenna unit is better than a second threshold, the second threshold being equal to or different from the first threshold; or
a quality of a reception via at least one new antenna unit becomes a threshold value better than reception qualities of antenna units having the M best reception qualities, M being an integer greater than or equal to one.

11. The method of claim 10, wherein the quality of the reception is determined based on determining a measurement quantity from a configured downlink reference signal, DL RS.

12. The method of claim 10 or 11, further comprising:
sending a report based on the triggering-event condition being satisfied, the report comprising an indication of the one or more antenna units satisfying a configured triggering-event condition.

13. The method of claim 10 or 11, further comprising:
sending a report based on the triggering-event condition being satisfied, the report being sent by:
uplink control information, UCI, transmitted in a physical uplink control channel, PUCCH, resource; or
dynamic physical uplink shared channel, PUSCH, and/or configured grant, CG, PUSCH.

14. The method of any one of claims 10 to 13, further comprising:
sending a notification from the UE (105) based on the triggering-event condition being satisfied, wherein the notification comprises an indication of a type of triggering-event condition that is satisfied or an indication of a remapping and/or a switching of one or more antenna units at the UE (105); and
receiving, by the UE (105), an acknowledgement of the remapping and/or the switching of the one or more antenna units in response to the UE sending the indication of the remapping and/or the switching of the one or more antenna units.

15. A user equipment, UE, comprising:
a processing circuit (120) configured to cause the UE (105) to perform the method of any one of the preceding claims.
